# EUROPEAN PATENT APPLICATION

(11) **EP 4 253 287 A1**
(43) Date of publication of application: **04.10.2023**
(21) Application number: 23165655.4
(22) Date of filing: 30.03.2023
(51) Int. Cl.: B65G 47/34, B26D 3/16, B26D 7/06, B26D 7/18, B26D 5/00

(54) **REWINDER FOR ROLL PRODUCTION, AND PROCESS OF DISCARDING TRIMMINGS OF A LOG DIVIDED INTO ROLLS**

(30) Priority: 31.03.2022 IT 202200006437
(71) Applicant: O.M.T. di Giannini Graziano e Damiano & C. S.N.C., 55012 Colle di Compito, Capannori (Lucca) (IT)
(72) Inventor: GIANNINI, Damiamo, I-55012 CASTELVECCHIO DI COMPITO, CAPANNORI (Lucca) (IT); GIANNINI, Graziano, I - 55012 CASTELVECCHIO DI COMPITO, CAPANNORI (Lucca) (IT)
(74) Representative: Lunati & Mazzoni S.r.L.

(57) **Abstract**

It is provided a device (1) for discarding trimmings (12) of a log (10) divided into rolls (11) and trimmings (12); the device (1) comprises a pair of belts (2) arranged on opposite sides of two movers (110, 120); a mat (3) subtended between the belts (2) and movable by the belts (2) defining a passage position in which it is subtended between the movers (110, 120) allowing the passage of the rolls (11) and a discarding position in which it is not subtended between the movers (110, 120) preventing the passage of the trimmings (12).

## Description

The present invention relates to a device for discarding trimmings of log of ribbon-like material, in particular associated with a log splitter machine, of the type specified in the preamble to the first claim.

As is well known, the log is a sheet of ribbon-like material (usually paper) of a predetermined width and length wrapped on a core, i.e. a tube usually made of cardboard.

The rewinder lines, hereafter referred to as 'rewinders', are machines for the production of large to small logs (or rolls) of ribbon-like material (appropriately paper). They comprise a feeding system for the ribbon-like material; a tube loading station; a winder for the ribbon-like material on the core forming the log; and a log splitter to which the log is fed and which splits the log into commercial sized rolls; and appropriately a wrapping machine.

In detail, the log splitter makes at both the head and tail ends of each log some trimmings, i.e. unusable pieces of log, in the form of rolls of limited length. In order to eliminate the trimmings from the production line, the rewinder has a device for discarding trimmings placed between the log saw and the wrapping machine.

The well-known devices for discarding trimmings (see e.g. EP2777896A1) allow the trimmings to be eliminated by means of an aspirator and a trimmings drop opening. In detail, it is foreseen that the aspirator, by sucking in the rolls, prevents them from falling into the opening, thus continuing one after the other along the production chain, while the trimmings are not sucked in and fall into the opening.

Another device for discarding trimmings (see EP2219834B1 or ITMI20041275A1) provides for an opening with two retractable/sliding planes that open and close the opening according to the passage of the cut log. In detail, this device foresees that the opening is closed when the logs pass through and opens when only the logs arrive, thus making them fall out.

The known technique described includes some major drawbacks.

In particular, these devices for discarding trimmings, in addition to a not insignificant risk of damage to the rolls (which is especially characteristic of devices with an aspirator), require complex and therefore expensive mechanical-electronic equipment to allow suction, release of the trimmings and, above all, synchronisation between the various components of the device for discarding trimmings and thus the rewinder.

A not insignificant drawback is in the frequent discarding errors of the device (with the need to monitor the process) and repeated malfunctions and/or failures resulting in a slowdown of production.

In this situation, the technical task at the heart of the present invention is to devise a device for discarding trimmings capable of substantially obviating at least some of the aforementioned drawbacks.

In the context of this technical task, it is an important aim of the invention to obtain a device for discarding trimmings characterised by simple and inexpensive mechanics-electronics.

Another purpose of the invention is to realise a device for discarding trimmings that has a low frequency of malfunctions and failures and is therefore not subject to frequent production interruptions.

It is therefore an important aim to create a device that is easy to construct and has relatively low purchase, maintenance and production costs.

The specified technical task and purposes are achieved by a device for discarding trimmings as claimed in the attached claim 1. Examples of preferred embodiments are described in the dependent claims.

The features and advantages of the invention are clarified below by a detailed description of preferred embodiments of the invention, with reference to the accompanying drawings, in which
the **Fig. 1** shows, to scale, a part of a rewinder including a device for discarding trimmings according to the invention;
the **Fig. 2a** is a section, to scale, of a rewinder assembly including a device for discarding trimmings according to the invention;
the **Fig. 2b** illustrates, in section and scale, the assembly of Fig. 2a at a different time;
the **Fig. 2c** shows, to scale, the assembly of Figs. 2a-2b at another time; and
the **Fig. 2d** shows, to scale, the assembly of Figs. 2a-2c at a further time.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise indicated, "perpendicular", "transverse", "parallel" or "normal" or other terms of geometric positioning between geometric elements (e.g. axes, directions and straight lines) are to be understood with reference to their reciprocal geometric position between the corresponding projections. These projections are defined on a single plane parallel to the plane(s) of location of said geometric elements.

The measurements and data reported in this text are to be considered, unless otherwise indicated, as performed in the International Standard Atmosphere ICAO (ISO 2533:1975).

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

With reference to the Figures, the device for discarding trimmings according to the invention is globally referred to as number **1.**

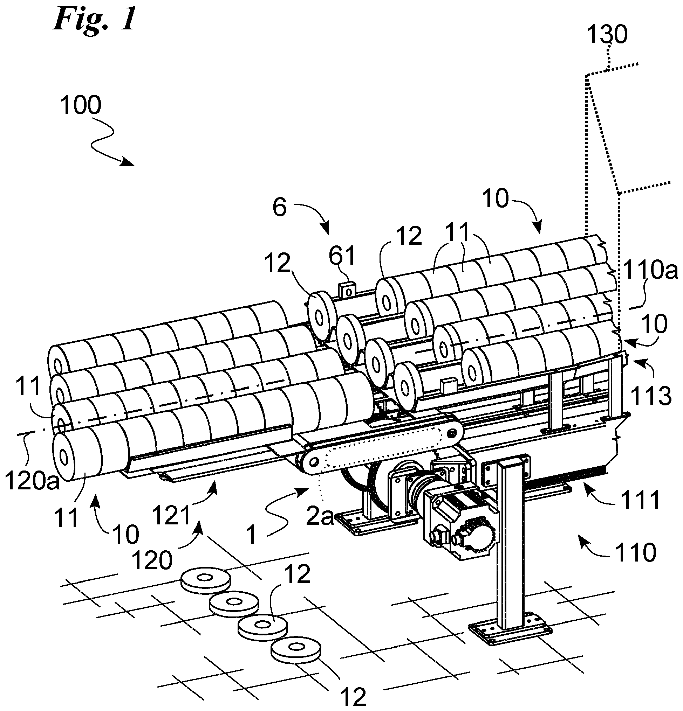

The device for discarding trimmings 1 is configured to reject the trimmings, i.e. the waste, of a log exiting the log splitter allowing the rolls to reach a subsequent station preferably a packaging machine. More in detail, the device 1 is configured to receive a log **10** (Fig. 1) exiting the log splitter and then split into one or more commercial sized elements (hereinafter univocally referred to as rolls **11)** of a desired length and suitably into at least one trimming 12 and to be precise into two trimmings 12 (one at the head and one at the tail of the log 10).

Head and tail of log 10 are defined in accordance with the direction of log 10.

The log 10 and therefore the rolls 11 and appropriately the trimmings 11 are elements, usually cylindrical, made by winding ribbon-like material (appropriately paper) appropriately on a core (appropriately paper/cardboard).

The device 1 can be part of a rewinder **100** defining a direction of movement of the log 10 suitably parallel to the axis of the log 10.

The rewinder 100 is configured to produce one or more rolls 11 by appropriately cutting log 10 into rolls 11. It may comprise, in addition to the device 1, a log splitter **130** placed upstream of the device 1 and splitting the log 10 into rolls 11 and at least one trimming 12 (in detail two) and a station downstream of the device 1 for discarding trim.

The log splitter 130, for simplicity schematically shown only in Fig. 1, is configured to split a log 10 into one or more rolls 11 and at least one trimming 12, and to be precise two trimmings 12. It can include a log 10 cutting system.

The log splitter 130 can be a known type.

The downstream station is configured to receive the log 10 and in particular only the one or more rolls 11 leaving device 1. It can be identified by a packaging machine. The rewinder 100 may comprise a first mover **110** of the log 10 and in particular of the one or more rolls 11 and the at least one trimming 12 upstream of the device 1. The first mover 110 is configured to receive the log 10 exiting the log splitter 130 and appropriately divided into one or more rolls 11 and at least one trim 1.

It can move the logs 10 along at least one first row defining a first axis of movement **110a** suitably barycentric to the log 10. Preferably it may be configured to move the logs 10 along multiple first rows parallel to each other.

The first mover 110 is configured to take the logs 10 and then the rolls 11 and the trimmings 12 appropriately out of the log splitter to the discarding device 1.

The first axis 110a can be essentially parallel to the axis of log 10.

It can be seen that the first mover 110 can move the log 10 along the entire rewinder 100 upstream of the device 1 for discarding trimmings.

The first mover 110 may define a first surface **110b** for supporting the log 10. In detail, it may comprise, for each first row, at least one porter **111** configured to move the log 10 along the first axis 110a; a kinematic mechanism **112** for moving the porter 111 along the first axis 110a; and a pair of side rails **113** defining said first surface 110b identifiable in a first channel for guiding the log 10 along the first axis 110a.

The first surface 110b can be substantially parallel to the first axis 110a.

The side rails 113 of a row are mutually spaced so that the porter 111 can pass between them.

The first mover 110 may include a first chute configured to facilitate the transition from the first mover 110 to device 1.

The rewinder 100 and in particular the log splitter machine can include a second mover **120** of the logs 10 and to be precise only rolls 11 coming out of the device 1. Preferably the second mover 120 accepts logs 10 consisting only of rolls 11.

The second mover 120 is configured to move the logs 10 along at least one second row each defining a second axis **120a** of movement suitably barycentric to the log 10. Preferably it may be configured to move the logs 10 along multiple second rows parallel to each other.

The second axis 120a can be essentially parallel to the axis of log 10 and thus rolls 11.

The second axis 120a can be substantially parallel to the first axis 110a. In detail, it coincides with and defines an extension of the first axis 110a.

Each second row can define the extension of a first row.

The second mover 120 may be passive and in particular exploit the first mover 110 and in particular the porter 111 to move the rolls 11 along the second axis 120a. In detail in this case the porter 111 presses a log 10 on the first mover 110 against the rolls 11 on the second mover 120 moving them. Alternatively, the second mover 120 may be active and thus comprise means for controlling the moving of the rolls 11 such as a conveyor belt and/or motorised rollers.

The second mover 120 may define a second surface **120b** supporting the log 10. In detail it may comprise, for each second row, a pair of bulkheads **121** defining said second surface 120b identifiable in a second guide channel of the rolls 11 along the second axis 120a.

The second surface 120b can be substantially parallel to the second axis 120a. The second mover 120 can include a second chute configured to facilitate the transition from device 1 to the second mover 120.

The movers 110 and 120 are detached from each other and are therefore spaced apart by a detachment length (i.e. a distance calculated along the first axis 110a and/or the second axis 120a) and therefore between the first surface 110b and the second surface 120b there is an opening **1a** through which the trimmings 12 are discarded.

Said opening 1a has a length, calculated along the first axis 110a, equal to said separation length and a width (calculated perpendicular to said separation length and parallel to the first surface 110b) at least equal to the diameter of log 10.

The separation length can be at least as long as the diameter of a log 10.

The device 1 for discarding trimmings comprises at least one pair of belts **2** defining a movement path **2a** and suitably a direction of movement; and at least one mat 3 constrained, in particular solidly, to the belts 2 of said pair so as to be moved by them along the movement path 2a.

Said at least one copy of belts defines a suitably closed movement trajectory 2a. In particular, the lying plane of the trajectory 2a may be perpendicular to the first surface 110b and/or the second surface 120b.

The movement path 2a is suitably superimposed on the entirety of the opening 1a so as to allow the trimming 12, when supported by the mat 3 as described below, to pass through the opening and thus move from the first mover 110 to the second mover 120. Preferably, said movement path 2a is at least partially overlapped by both movers 110 and 120. Accordingly, the belts 2 are interposed between first mover 110 and second mover 120.

The movement path 2a may comprise an outward section from the first to the second mover superimposed on said opening 1a, a return section from the second to the first mover superimposed on said opening 1a and parallel to said first section; and a third connecting section and a fourth connecting section between the first and second sections defining closed said path 2a.

The first section may be parallel and in detail coplanar to at least one surface 110b and/or 120b.

The second section can be parallel and in detail coplanar to at least one surface 110b and/or 120b.

The belts 2 are placed on opposite sides of the first axis 110a. Therefore, the first axis 110a (and/or an extension thereof) is interposed between belts 2.

The belts 2 are placed on opposite sides of the second axis 120a. Therefore, the second axis 120a (and/or an extension thereof) is interposed between the belts 2.

The belts 2 have a mutual distance (properly calculated perpendicular to the path 2a) at least equal to and preferably greater than the diameter of said log 10.

In the case of more than one first row and more than one second row, the device 1 may comprise a single pair of belts 2 placed on opposite sides of the axes 110a and 120a and having a mutual distance at least equal to the sum of the diameters of the logs 10 in each row; and at least one mat 3 constrained, in particular solidly, to said belts 2 and 3. Alternatively, in the case of more than one first row and more than one second row in each row, the device 1 may comprise a pair of belts 2 placed on opposite sides of the axes 110a and 120a of said row and having a mutual distance at least equal to the diameter of a log 10; and a mat 3 constrained, in particular solidly, to the belts 2 of said pair and therefore moved by said pair. In this case, the pair of belts 2 are independently and/or simultaneously driven by each other. Preferably, the mat 3 is subtended between belts 2. It therefore has its ends, suitably parallel to the path 2a, constrained, in particular solidly, to a portion of belts 2. The mat 3 is constrained to a portion of belts 2 which, therefore, present a first portion provided with mat 3 and therefore configured to support the rolls 11 allowing them to pass from the first to the second mover; and a second portion without belt 6 and therefore configured not to support the trimmings 12 (and possibly the rolls 11) suitably preventing them from passing from the first to the second handler and therefore causing them to fall as described below.

The mat 3 defines a supporting surface of at least one log 10 (in particular of rolls only) passing from the first mover 110 to the second mover 120.

The mat 3 defines a calculated length along the movement path 2a.

In detail, the length of the mat 3 is at least equal to said separation length and appropriately substantially between 100% and 200%, and more precisely between 110% and 150% of the separation length.

It is substantially no greater than the distance, calculated along the movement path 2a, between the pulleys 4 and 5, and in particular substantially between 50% and 100% of the distance between the pulleys 4 and 5.

Appropriately, the width of mat 3 (normally calculated at the movement path 2a and in particular at the first axis 100a) is at least equal to the diameter of a log 10.

The device 1 may comprise a mover configured to move the at least one pair of belts 2 and then the mat 3 along the movement path 2a in said forward direction In particular, it includes a mover for each pair of belts 2 and in particular for each belt 2.

The mover 3 may comprise a first pulley **4** and a second pulley **5.**

At least one pulley 4 and 5 is motorised.

The distance between the pulleys 4 and 5 (in detail between their axes) can be at least as long as the support length and to be more precise than the separation length.

The first pulley 4 may be placed at the first mover 110 and in particular at the first surface 110b. It may be placed under the first surface 110b and in particular the first chute.

The second pulley 5 may be placed at the second mover 120 and in particular at the second surface 120b. It may be placed under the second surface 120b and in particular the second chute.

The first pulleys 4 of the 2 belts can be coaxial.

The second pulleys 5 of belts 2 can be coaxial.

The axes of pulleys 4 and 5 can be parallel to each other.

The mat 3 is integral and can therefore be moved by a pair of belts 2 defining a passing position and at least one falling position.

In the passing position the mat 3 is subtended between the movers 110 and 120 and thus overlaps the opening 1a. It is therefore subtended between the surfaces 110b and 120b allowing the rolls 11 to pass from the first mover 110 to the second mover 120.

In passing position one or more rolls 11 rest on the mat 3.

In said at least one discarding position the mat 3 is not subtended between the movers 110 and 120 and therefore does not overlap with at least part of the opening 1a leaving free a portion of the opening 1a of a length (calculated along the first axis 110a) at least equal to the diameter of the log. It does not allow the passage from the first 110 to the second mover 120 of the trimmings 12 which fall into the opening 1a and are thus discarded.

Appropriately in at least one discard position, mat 3 does not overlap with the whole of the opening 1a.

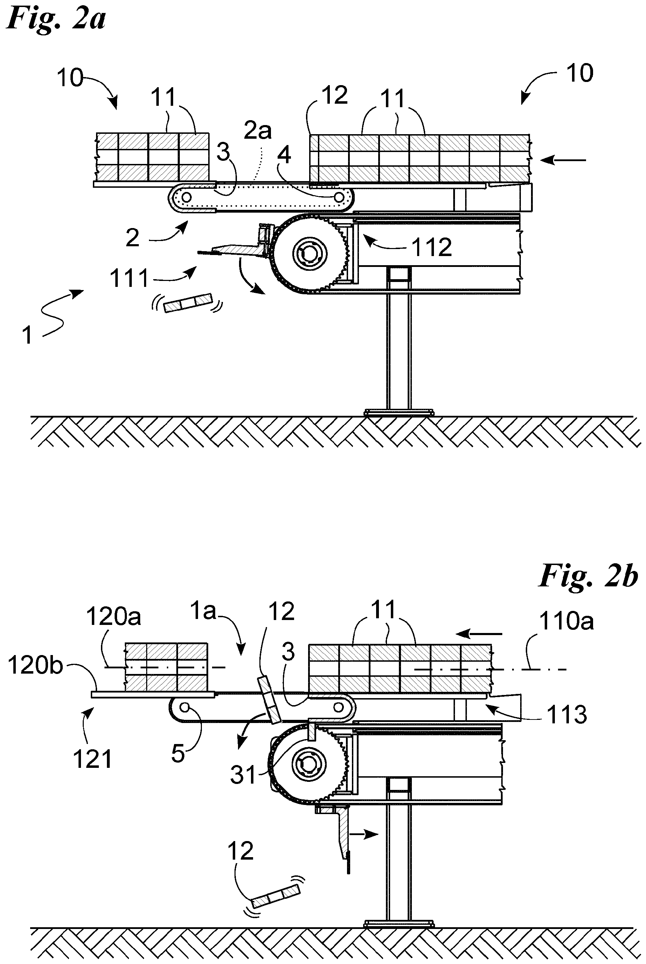

Preferably, the mat 3 defines a first discarding position where it is placed at the first pulley 4 and a second discarding position where it is placed at the second pulley 5. In the first discarding position the mat 3 is placed under the first pulley 110. Preferably in said first position the mat 3 has its central portion at the first pulley 4 (Fig. 2b).

In the second discarding position the mat 3 is placed under the second mover 120. Preferably in said second position, the mat 3 has its central portion at the second pulley 5 (Fig. 2a).

The mat 3 may comprise a push tooth **31** of the log 10 and specifically of rolls 11 only.

The tooth 31 is configured to protrude from the mat 3 (from the support surface to be precise) by appropriately pressing and then dragging on a roll 11 (in detail the last roll 11 of a log 10 in accordance with the direction of advancement of the same log) appropriately towards the second mover 120.

The tooth 31 is configured to pass between the pair of side rails 113.

It is configured to pass between the pair of bulkheads 121.

The tooth 31 is constrained to the mat 3 so as to be moved by it. It is appropriately placed at the end of the mat 3 (calculated with respect to the direction of movement of mat 3).

In particular, it is constrained in a compliant way (e.g. hinged or translatable) to the mat 3 so as to be movable along a transverse direction and in detail perpendicular to the supporting surface. It may define a protruded position in which it protrudes from the mat 3 appropriately by a maximum protrusion height and a retracted position in which the mat 31 does not protrude from the mat 3.

More specifically, the mat 3 may comprise elastic means configured to press tooth 31 to protrude from the mat 3 and thereby oppose its re-entry, i.e. a reduction in the protrusion height of tooth 31 from the mat 3.

The elastic means are then configured to oppose a passage of the tooth 31 into a retracted position. They may be a torsion spring configured to press the tooth 31 into a protruded position allowing a roll 11 to carry it into a retracted position with its own weight.

The device 1 for discarding trimmings may comprise a control block **6** (Fig. 1) for the movement of the belts 2 and thus the mat 3. In some cases, said block 6 may be part of the rewinder 100 and thus control the operation of the rewinder.

The control block 6 may comprise a board (e.g. a well-known arduino) configured to control at least the belts 2.

The board may include a memory comprising the length of log 10 and appropriately of rolls 11 (and thus the number of rolls 11 in each log 10).

The board can be in data connection with the first mover 110 and in detail the kinematics 112 so as to control its motion and thus know the speed and/or position of the porter 111.

It can be in data connection with the belts 2 and in particular with the at least one motorised pulley 3 and/or 4 so as to control their motion and thus know the speed of the belts 2.

The control block 6 may comprise at least one sensor **61** configured to detect the presence/position of the log 10 on the first mover 110 (suitably along the first axis 110a) and in detail on the first surface 110b. Preferably, the sensor 61 may be configured to detect the presence/position of the log 10 in the vicinity of the end of the first surface 110b and thus the free space.

The sensor 61 is configured to directly detect the presence/position of the log 10 on the first mover 110. It can, for example, be identified in a photocell as shown in Fig. 1.

Alternatively or additionally, the sensor 61 is configured to indirectly detect the presence/position of the log 10 on the first mover 110. In particular, it is configured to detect the presence/position of the log 10 depending on the position of the at least one porter. Therefore, the sensor 61 may be an encoder connected to the kinematic 112 so as to know the position of the porter 111.

The control block 6 can comprise one sensor 61 for each first row.

The sensor 61 may be a photocell or other device configured to detect the passage of log 10.

The operation of device 1 for discarding trimmings described above in structural terms defines a new trim discarding procedure.

The rewinding process can be part of a log 10 rewinding process.

The rewinding process can be performed by the rewinder 100.

It may comprise a process of wrapping at least one sheet (appropriately in paper material) around a core (appropriately in paper material) forming a log 10; a subdivision process in which the log 10 is divided into one or more rolls 11 and at least one trimming 12, and to be precise into two trimmings 12 (one at the head and one at the tail of the log 10); said trimmings discarding process; and in some cases a process of wrapping the rolls 11.

The processes of wrapping, splitting and eventual packaging can be of a known type.

The trimmings discarding procedure includes a first head trim discarding phase 12. At this first stage the mat 3 is in the first trim position (Figs. 2a-2b). Accordingly, the opening 1a is open/clear and the porter 11, pushing the log 10 on the first surface 110b along the first axis 110a, brings the head trimming 12 close to the opening 1a and pushes it into the opening 1a dropping it in and then discarding it.

It can be seen that the arrival of log 10 in correspondence with device 1 and in particular the passage of trimming 12 is detected by sensor 61.

Having discarded the head trimming 12, the trim discard procedure includes a passage phase in which, the mat 3 being in the passing position, the rolls 11 pass from the first mover 110 to the second mover 120 and then from the first surface 110b to the second surface 120b.

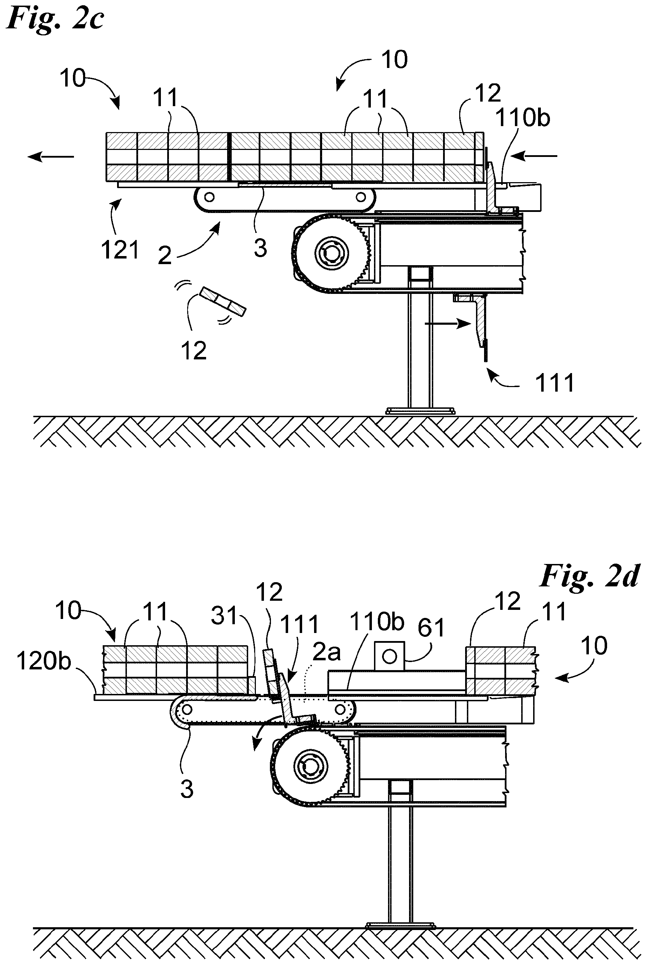

The passage phase may comprise a first sub-phase of moving the mat 3 from the first discarding position to the passing position (Figs. 2b-2c); a stopping sub-phase in which the mat 3 remains in the passing position (Fig. 2c); and a second sub-phase of moving the mat 3 from the passing position to the second discarding position (Figs. 2c-2d).

In the first movement sub-phase and the stopping sub-phase, the sensor 61 detects the passage of rolls 11.

In the first movement sub-stage, the advancement of the log 10 and in detail of the rolls 11 is controlled by the porter 11 and/or the passage of the mat 3 from the first discarding position to the passing position. Preferably in this phase porter 11 and mat 3 can have the same speed.

In the stopping sub-phase, the advancement of log 10 and in detail of rolls 11 is controlled by porter 111

In the stopping sub-phase, the tooth 31 is pushed, appropriately in opposition to the elastic means, into the retracted position by the weight of the log 10 and in particular of at least one roll 11.

The second movement sub-phase is controlled by the sensor 61 when it detects the passage of the last roll 11 and/or head trimming 12 and thus the arrival of the last roll 11 on the mat 3.

It should be noted that the identification of this passage is made by the board according to sensor 61 (relevant for example to the beginning of the passage of log 10 and/or the position of porter 111) and the known speed of porter 111 and known length of log 10 and/or rolls 11. The sensor 61 can determine the position of log 10 directly by detecting the passage of log 10 and/or indirectly by detecting the position of porter 111

In the second movement sub-phase, the advancement of the rolls 11 can only be controlled by the passage of the mat 3 from the passing position to the second discarding position. In detail, in this second sub-phase the card 6 commands to the belts 2 and therefore to the mat 3 a greater speed of the porter 111. This greater speed of the mat 3, exploiting the support of the one or more rolls 11 on the same mat 3, allows both to distance the last roll 11 from the head trimming 12 and to free the opening 1a through which only the head trimming 12 is discarded and the porter 111 passes between the belts 2.

In the second movement sub-phase, the advancement of the rolls 11 can be controlled by the passage of the mat 3 and in particular by the tooth 31. In fact, in this sub-phase no roll 11 presses on the tooth 31 which passes in a protruded configuration and, dragged by the mat 3, pushes one or more rolls 11 1 the second mover 120.

Once the second discarding position has been reached, the procedure includes a second discarding phase of the tail trim.

In the second discarding phase, the mat 3, being appropriately placed almost around the second pulley 5, leaves the opening 1a free, allowing the discarding of the head trimming 12 and the passage of the porter 111.

It can be seen that at this point, in the case of a second passive mover, the log 10 (consisting only of rolls 11) on the second mover 120 remains stationary until a new log 10, pushed by porter 11, passes through opening 1a between movers 110 and 120 and pushes said log 10.

The second discarding phase ends when porter 111 has passed through opening 1a and appropriately belts 2.

The trim discarding procedure therefore includes a phase of returning the mat 3 to the first discarding position (Figs. 2d-2a).

Preferably the return phase is completed before the sensor 61 detects a new log 10. The device 1 and thus the trimming process according to the invention achieve important advantages.

In fact, thanks to the adoption of a special mat 3 and its innovative way of using it, it avoids damaging the rolls, reducing production waste without, at the same time, a complex and therefore expensive mechanical-electronic handling and control device 1.

This simplicity of device 1 for discarding trimmings results in high efficiency and high reliability, which translates into less downtime and reduced production and maintenance costs.

The second mover 120 may comprise idle rollers suitably defining a second axle 120a and then a second surface 120b inclined (e.g. by an angle of less than 10° and to be precise 5° with respect to the normal to the gravitational gradient) so as to allow the rolls 11 to slide by gravity on the second surface 120b.

The invention is susceptible to variations within the scope of the inventive concept as defined by the claims. Within that scope, all details are substitutable by equivalent elements and the materials, shapes and dimensions can be any.

## Claims

1. Rewinder (100) for roll (11) production comprising
- a first mover (110) of rolls (11) and at least one trimming (12);
- a second mover (120) of said rolls (11);
**characterised by**
- said movers (110, 120) being spaced apart by defining between said movers (110, 120) an opening (1a) for discarding of said trimmings (12).
**by** comprising a device (1) for discarding of said trimmings (12) interposed between said movers (110, 120) so as to permit the passage of only said rolls (11) from said first mover (110) to said second mover (120); said device (1) comprising
- a mat (3) having a width at least equal to the diameter of said log (11);
- belts (2) between these movers (110, 120) and defining a closed movement path (2a);
**and by** said mat (3) is constrained between said belts (2) so as to be moved by said belts (2) along said movement path (2a) defining
- a transition position where it is subtended between said movers (110, 120) allowing said rolls (11) to pass from said first mover (110) to said second mover (120); and
- a discarding position in which it is not subtended between said first movers (110, 120) leaving the space between said first mover (110) to said second mover (120) free by not allowing said at least one trimming (12) to pass from said first mover (110) to said second mover (120).

2. Rewinder (100) according to claim 1, comprising for each of said belts (2) a first pulley (4) located at said first mover (110) and a second pulley (5) located at said second mover (120); and wherein said mat (3) defines a first discarding position in which said mat (3) has its central portion in correspondence with said first pulley (4) and a second discarding position in which said mat (3) has said central portion in correspondence with said second pulley (5).

3. Rewinder (100) according to claim 2, comprising a control block (6) comprising a board configured to control at least said belts (2) and at least one sensor (61) configured to detect the presence of said log (10) on said first mover (110) so as to control
- the passage to said first discarding position when said log approaches said device (1) allowing the discarding of said head trimming (12);
- the passage in said passage position when said rolls (11) approach said device (1) allowing the passage of said rolls on said mat (3);
- the transition to said second discarding position when said tail trimming (12) approaches said device (1) permitting the discarding of said tail trimming (12).

4. Rewinder (100) according to at least one preceding claim, wherein said belts (2) have a distance from each other at least equal to said log (10) diameter.

5. Rewinder (100) according to at least one preceding claim, comprising a log splitter (130) placed subdividing a log (10) into said rolls (11) and said at least one trimming (12); and wherein said first handler (110) is configured to handle said rolls (11) and said at least one trimming (12) at said log splitter (30) outlet.

6. Rewinder (100) according to at least one preceding claim, wherein said first mover (110) comprises at least one porter (111) configured to move said log (10); a kinematic mechanism (112) for moving said porter (111); and a pair of side rails (113) configured to define a first guide channel of said log (10) when moved by said porter (111); and wherein said second discarding position wherein said mat (3) has said central portion at said second pulley (5) so that when said porter (111) passes between said belts (2) it does not intercept said mat (3).

7. Rewinder (100) according to the preceding claim, in which when said rewinder commands the passage to said second discarding position said board commands said mat (3) a higher speed than said porter (111))

8. Process of discarding trimmings (12) of a log (10) divided into rolls (11) and at least one of said trimmings (11) comprising a rewinder (100) according to at least one preceding claim and
- a first discarding phase of said trimming (12) in which said mat (3) is in said first discarding position;
- a passage phase in which said belt (4) is in said passage position allowing said rolls (11) to pass from said first mover (110) to said second mover (120) through said mat (3);
- a second discarding phase in which said mat (3) is in said second discarding position leaving free the space between said movers (110, 120) allowing the discarding of said tail trimming (12) and the passage of said porter (111).

9. Process according to the previous claim, including a phase of return of said mat (3) to said first discard position.

10. Process according to at least one of claims 8-9, wherein said passage phase comprises a first sub-phase of moving said mat (3) from said first discarding position to said passing position; a stopping sub-phase wherein said mat (3) is in said passing position allowing passage of said rolls (11); and a second sub-phase of moving of said mat (3) from said passing position to said second discarding position.

11. Process according to the preceding claim, wherein in said second moving sub-stage of said mat (3) has a greater speed than said porter (111) allowing said rolls (11) to be spaced out from said tail trimming (12).
